# EUROPÄISCHE PATENTSCHRIFT

(11) **EP 0 805 762 B1**
(45) Veröffentlichungstag und Bekanntmachung des Hinweises auf die Patenterteilung: **11.08.1999**
(21) Anmeldenummer: 95940947.5
(22) Anmeldetag: 11.12.1995
(51) Int. Cl.: B60N 3/00

(54) **TISCHEINRICHTUNG FÜR KRAFTFAHRZEUGE**
TABLE ARRANGEMENT FOR MOTOR VEHICLES
AGENCEMENT DE TABLE POUR VEHICULES A MOTEUR

(30) Priorität: 13.12.1994 DE 4444329
(43) Veröffentlichungstag der Anmeldung: 12.11.1997
(73) Patentinhaber: Lendl, Wilhelm, 73666 Baltmannsweiler (DE)
(72) Erfinder: Lendl, Wilhelm, 73666 Baltmannsweiler (DE)
(74) Vertreter: Schuster, Gregor
(86) Internationale Anmeldenummer: DE9501773
(87) Internationale Veröffentlichungsnummer: WO9618520

(56) Entgegenhaltungen:
- BE-A- 794 697
- US-A- 2 856 251

## Beschreibung

### Stand der Technik

Die Erfindung geht aus von einer Tischeinrichtung nach der Gattung des Hauptanspruchs. Derartige Tischeinrichtungen werden insbesondere während des Stehens eines Fahrzeugs in Funktion gebracht. Derartige Tischeinrichtungen dienen sowohl als Auflage für das Essen mit Tellern, Besteck udgl. oder aber für Literatur bzw. als Schreibunterlage.

Bei einer bekannten Tischeinrichtung (GB-OS 22 18 624) wird der Tischunterteil auf das Lenkrad des Kraftfahrzeuges gelegt, wobei am Unterteil auf der dem Lenkrad zugewandten Seite Zapfen vorgesehen sind, durch die verhindert wird, daß bei der gegebenen Schräglage des Lenkrades die Tischeinrichtung zum Fahrer hin verrutscht. Die Schwenklage der Tischplatte wird durch Langlochlaschen bestimmt, die seitlich an der Tischplatte angeordnet sind und über Spannschrauben, auf denen die Laschen mit ihrem Langloch geführt sind, zur Bestimmung der Winkellage festspannbar sind. An der dem Fahrer zugewandten Seite ist auf der Tischplatte eine Leiste vorgesehen, durch die ein Wegrutschen der auf der Tischplatte auflegbaren Literatur verhindert wird. Ein Waagrechtstellen dieser Tischplatte ist nicht möglich. Hierdurch ist der Anwendungsbereich stark eingeschränkt und insbesondere eine Nutzung als Speisetisch nicht möglich. Zudem verträgt die Einstelleinrichtung zur Bestimmung der Winkellage keine höhere Belastungen, es sei denn, die Spannschraube wird außerordentlich fest angezogen, was nicht jedem Fahrer ohne zusätzliches Werkzeug möglich ist.

Bei einer anderen bekannten Tischeinrichtung (US-PS 4 890 559) besteht der Unterteil aus einem nach unten offenen flachen Kasten, der auf das Lenkrad gestülpt wird. Hierdurch ist eine Verankerung am Lenkrad gegen Sichverdrehen kaum möglich. Die Tischplatte ist jedoch in eine waagrechte Lage schwenkbar. Als Einstelleinrichtung zur Bestimmung der Winkellage sind Stützstäbe vorgesehen mit Lochreihen, durch welche ein beide Stützstäbe erfassender Stab steckbar ist, der hierfür außerdem durch den Rahmen des Unterteils steckbar ist. Der Stab selber wird auf der Unterseite der Tischplatte aufbewahrt. Abgesehen davon, daß es sich hierbei um eine umständliche Art der Einstelleinrichtung handelt, ist, wie bei der anderen bekannten Tischeinrichtung, die Stütze außerhalb des Unterteils angeordnet und taucht damit in den Beinbereich des Fahrers unterhalb des Lenkrades. Der Fahrer kann somit nicht unbehindert aus- und einsteigen. Nicht zuletzt gilt für beide bekannten Tischeinrichtungen, daß sie im Zweck stark eingeschränkt und umständlich zu handhaben sind.

Bekannt ist eine gattungsgemäße Tischeinrichtung (BE-A-794 679) zur Anbringung am Lenkrad eines Kfz, welches einen Unterteil mit Verankerungseinrichtung zur Verankerung am Lenkrad aufweist. Dieser Unterteil ist durch einen nun als Tischplatte ausgebildeten Deckel verschließbar. Im aufgeklappten Zustand ist die dem Unterteil zugewandte Seite des Deckels als Tischplatte verwendbar. Wenn die Tischeinrichtung an einem Lenkrad eingehängt ist, wird die Tischplatte im wesentlichen in Richtung der Schwerkraft aufgeklappt und durch eine Einstelleinrichtung in einer annähernd waagerechten Stellung fixiert. Diese Einstelleinrichtung wird auf Zug belastet und ist außerdem nahe am Drehpunkt des Unterteil und Tischplatte verbindenden Scharniers angeordnet. Daraus ergeben sich ungünstige Hebelverhältnisse für die Einstell- und Klemmeinrichtung, so daß bei unsachgemäßer Bedienung oder Überlastung der Tischplatte diese nach unten wegklappen kann und sämtliche auf ihr befindlichen Gegenstände in den Schoß des Benutzers fallen.

Die Erfindung und ihre Vorteile

Die erfindungsgemäße Tischeinrichtung mit den kennzeichnenden Merkmalen des Hauptanspruchs hat demgegenüber den Vorteil, daß sie bei Lenkrädern mit relativ geringer Neigung gegenüber der Horizontalen, wie sie in Lastkraftwagen eingesetzt werden, verwendet werden kann.

Nach einer vorteilhaften Ausgestaltung der Erfindung weist die Verankerungseinrichtung Haken odgl. auf, die auf der dem Fahrer zugewandten Seite des Lenkrades dieses umgreifen. Es ist grundsätzlich. bekannt, Haken zu verwenden (DE-GM 1 867 782). Der Vorteil derartiger Haken besteht darin, daß die Tischeinrichtung aufgrund der gegebenen Keilwirkung sich am Lenkrad festklemmen kann, so daß ein Verdrehen nur mit dem Lenkrad möglich ist, welches bekanntlich bei Zurückdrehen des Zündschlüssels durch Einfallen des Lenkradschlosses arretiert ist. Haken als Verankerungseinrichtung haben zudem den Vorteil, daß eine geringere Abhängigkeit vom Durchmesser des Lenkrades besteht. Es könnte jedoch auch ein Überstülpring als Verankerungseinrichtung dienen, wobei allerdings der Durchmesser eines solchen Überstülpringes in etwa dem Lenkraddurchmesser entsprechen sollte. Da jedoch die Tischeinrichtung in ihrer Gestaltung weitgehend unabhängig von der Gestaltung der Verankerungseinrichtung ist, müßte lediglich die Verankerungseinrichtung den jeweiligen Lenkradgegebenheiten angepaßt werden.

Nach einer weiteren vorteilhaften Ausgestaltung der Erfindung weist die Verankerungseinrichtung eine Verschiebeeinrichtung auf, über welche der Unterteil in bezug auf das Lenkrad relativ zum Fahrer hin verstellbar und/oder feststellbar ist. Der besondere Vorteil besteht darin, daß bei der Auflage auf Lenkrädern die Tischplatte entsprechend der Schräge des Lenkrades relativ weit zum Fahrer hin gezogen werden kann, um dadurch einerseits die endgültige Höhe der Tischplatte entsprechend tief z.B. fürs Schreiben zu erhalten und andererseits zu erreichen, daß insbesondere beim Essen der Fahrer sich über den Teller beugen kann.

Nach einer diesbezüglichen vorteilhaften Ausgestaltung der Erfindung weist die Verschiebeeinrichtung eine parallel zum Boden des Unterteils angeordnete Nut- und Federverbindung auf. Hierbei kann es sich um eine Verbindung zwischen einer zur Verankerungseinrichtung gehörenden Platte und dem Boden des Unterteils handeln.

Nach einer alternativen diesbezüglichen vorteilhaften Ausgestaltung der Erfindung weist die Verschiebeeinrichtung einen im wesentlichen U-förmig gebogenen Drahtbügel auf, dessen U-Schenkel in Verschieberichtung im Unterteil verschiebbar bzw. einrastbar gelagert sind und dessen die Schenkel verbindender Teil auch als Traggriff dient und so gekröpft ist, daß er das Lenkrad umgreifen kann. Ein solcher Drahtbügel ist federnd ausgebildet, wobei er in eingeschobener Stellung als Traggriff dienen kann und wobei die Enden der Schenkel gekröpft sein können, um dadurch mit entsprechenden Einrastöffnungen am Unterteil zusammenzuwirken. So ist es auch möglich, im Unterteil in Verschieberichtung mehrere Ausnehmungen oder Rasterstufen vorzusehen, um dadurch je nach Bedarf den Bügel unterschiedlich weit herausgezogen festlegen zu können. Besonders bei der Kombination Metall als Drahtbügel und Kunststoff als Unterteil und einem kreisflächigen Querschnitt des Drahtbügels können die Kunststofflager am Unterteil derart gestaltet sein, daß der Draht in ein solches Lager eindrückbar bzw. einschnappbar ist. Durch das Anordnen der U-Schenkel innerhalb des Behälters werden vor allem nach außen ragende sperrige Teile an der Tischeinrichtung vermieden.

Nach einer weiteren vorteilhaften Ausgestaltung der Erfindung sind Tischplatte und Unterteil durch ein Scharnier miteinander verbunden und dadurch zueinander verklappbar. Auf diese Weise kann unabhängig von jeweiligem Fahrzeugtyp und damit Lenkradschräge die Tischplatte in die gewünschte, weitgehend waagrechte Position verstellt werden. Wobei das Scharnier auf der dem Fahrer abgewandten Seite der Tischeinrichtung angeordnet ist. Diese Einstellung kann dann so erfolgen, daß die Tischplatte ein gewisses Gefälle zum Fahrer hin aufweist - auch um zu vermeiden, daß irgendwelche Speisen zum Armaturenbereich des Fahrzeuges hin ungewünscht gelangen.

Nach einer diesbezüglichen weiteren vorteilhaften Ausgestaltung der Erfindung ist die Stützeinrichtung am Unterteil in Richtung Tischplatte schwenkbar gelagert oder die Stützeinrichtung kann an der Unterseite der Tischplatte in Richtung Unterteil schwenkbar gelagert sein. Auf diese Weise wird sehr einfach erzielt, daß beim Verklappen der Tischplatte die Stützeinrichtung nach unten bzw. nach oben ausgeschwenkt wird und am Unterteil bzw. unter der Tischplatte einrastet. Zum nach unten Schwenken der Tischplatte kann dann die Stützeinrichtung entsprechend verschwenkt oder ganz eingeschwenkt werden.

Nach einer weiteren diesbezüglichen Ausgestaltung der Erfindung sind an der Tischplattenunterseite oder im Unterteil Vertiefungen und/oder Erhöhungen zur Sicherung der Verschwenkstellung der Stützeinrichtung vorhanden. Besonders wenn es sich um einen Behälter aus Kunststoff handelt, lassen sich solche Vertiefungen oder Erhöhungen problemlos miteinformen. Aber auch bei einem aus Metall oder aus sonstigem Material bestehenden Behälter sind meist Einlagen vorgesehen, in die dann diese gewünschten Raster vorgesehen sein können.

Nach einer weiteren vorteilhaften Ausgestaltung der Erfindung besteht die Stützeinrichtung aus einem Drahtbügel. Ein solcher Drahtbügel nimmt wenig Raum ein, läßt sich mit abgekröpften Enden sehr einfach lagern, beispielsweise in quer zur Schwenkrichtung verlaufenden Bohrungen, in die die gekröpften Enden des Bügels eingesteckt werden, wobei sie aufgrund der Elastizität des Bügels in dieser Stellung gehalten werden.

Nach einer weiteren vorteilhaften Ausgestaltung der Erfindung sind im Unterteil der Tischplatte zugewandte, Fächer bildende Trennwände vorhanden, um so zu vermeiden, daß die Waren durcheinander gelangen. So können einzelne Fächer für Bestecke, andere für Speisen und wieder andere für Literatur udgl. dienen.

Nach einer diesbezüglichen weiteren vorteilhaften Ausgestaltung der Erfindung sind die Fächer in geschlossenem Zustand des Behälters durch die Tischplatte bzw. auf der Innenseite der Tischplatte angeordnete korrespondierende Trennwände verschließbar. Eine solche raumverschließende Abdeckung kann erforderlichenfalls wasserdicht gestaltet sein, durch beispielsweise eine elastische Schicht auf der Unterseite der Tischplatte und es können die einzelnen Fächer bei der Ausbildung aus Kunststoff einstückig mit der Unterplatte ausgebildet sein. Aus Gewichts- und Stabilitätsgründen kann eine entsprechende Trennwandausbildung auch auf der Unterseite der Tischplatte vorgesehen sein.

Nach einer weiteren vorteilhaften Ausgestaltung der Erfindung ist der durch Unterteil und Tischplatte gebildete Behälter durch eine Verriegelungseinrichtung abschließbar. Hierdurch kann einerseits der Transport irgendeiner Ware vereinfacht werden, andererseits auch ein unerwünschter Zugang unterbunden werden.

Nach einer weiteren vorteilhaften Ausgestaltung der Erfindung weist die Tischplatte eine rechteckige Oberfläche auf, mit vorzugsweise abgerundeten Ecken und Ausnehmungen für das Auffangen von Flüssigkeiten oder zur Aufnahme von Getränkebehältern, wie Trinkbechern, Flaschen udgl.

Die Erfindung ist nicht nur eingeschränkt auf die Anwendung einer solchen Tischeinrichtung für Kraftfahrzeuge im Straßenverkehr, sondern es ist auch eine Anwendung in Flugzeugen, Eisenbahnwagen, Campingwagen, aber auch Omnibussen udgl. denkbar, jeweils dann wenn ein Lenkrad oder eine entsprechende Unterlage vorhanden ist.

Weitere Vorteile und vorteilhafte Ausgestaltungen der Erfindung sind der nachfolgenden Beschreibung, der Zeichnung und den Ansprüchen entnehmbar.

### Zeichnung

Zwei Ausführungsbeispiel des Gegenstandes der Erfindung sind in der Zeichnung dargestellt und im folgenden näher beschrieben. Es zeigen:
- Fig. 1: das erste Ausführungsbeispiel perspektivisch von seitlich unten;
- Fig. 2: dasselbe Ausführungsbeispiel perspektivisch von seitlich oben;
- Fig. 3: das zweite Ausführungsbeispiel perspektivisch von seitlich oben;
- Fig. 4: eine Teilaußenansicht desselben und
- Fig. 5: eine Innenansicht auf die geöffnete Tischeinrichtung.

### Beschreibung der Ausführungsbeispiele

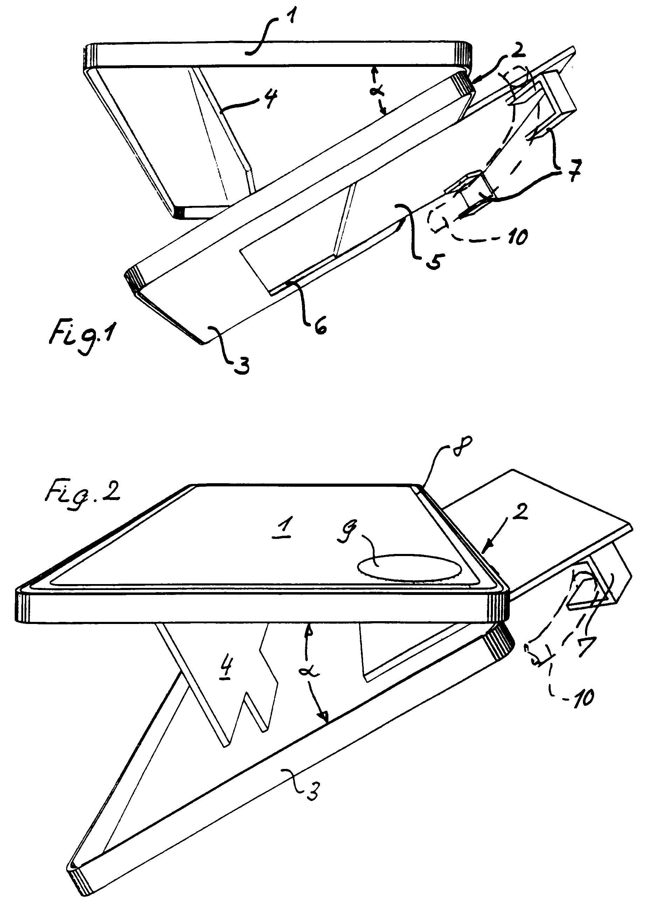

Bei dem ersten in Fig. 1 und Fig. 2 perspektivisch dargestellten Beispiel der erfindungsgemäßen Tischeinrichtung ist eine als Deckel dienende Tischplatte 1 über nicht dargestellte auf der Stirnseite 2 angeordnete Scharniere mit einem behälterförmigen Unterteil 3 schwenkbar verbunden. Die Unterseite der Tischplatte 1, sowie die Oberseite des Unterteils 3 sind hohl ausgebildet, so daß die beiden Teile 1 und 3 aufeinanderpassend Deckel und Behälter bilden. Dieser Behälter kann je nach Bedarf mit Ware gefüllt werden.

Die Tischplatte 1 ist zum Unterteil 3 um einem bestimmten Winkel α aufgeklappbar, so daß trotz Schräglage des Unterteils 3 die Tischplatte 1 weitgehend waagerecht angeordnet sein kann. Um diese Winkellage α fixieren zu können, ist zwischen Tischplatte 1 und Unterteil 3 eine Einstelleinrichtung in Form einer Stützeinrichtung 4 angeordnet, die über nicht dargestellte Mittel an der Unterseite der Tischplatte 1 schwenkbar gelagert ist und sich mit der der Tischplatte 1 abgewandten Seite auf der Oberseite des Unterteils 3 abstützen kann. Je nach Schwenklage dieser Stützeinrichtung 4 ist auch die Winkellage α der Tischplatte 1 unterschiedlich.

Auf der Unterseite des Unterteils 3 ist eine Verankerungseinrichtung 5 vorhanden, die in einer Feder und Nut aufweisenden Schiebeverbindung 6 mit dem Unterteil 3 verbunden ist. Die jeweilige Verschiebelage zwischen Verankerungseinrichtung 5 und Unterteil 3 kann durch nicht dargestellte Mittel arretiert werden. An der Verankerungseinrichtung 5 sind außerdem Haken 7 angeordnet, um die Tischeinrichtung an einem nur angedeuteten Lenkrad 10 eines Kraftfahrzeuges befestigen zu können, indem der Unterteil 3 auf das Lenkrad aufgelegt wird und dann beim Verschieben in Richtung Fahrer die Haken 7 am Lenkrad 10 sich festhaken. Je nachdem wie weit die Verankerungseinrichtung 5 gegenüber dem Unterteil 3 nach außen verschoben wird, ist die ganze Tischeinrichtung näher zum Fahrer verschoben. Auf der Tischplatte 1 ist eine Rinne 8 und eine Ausnehmung 9 vorgesehen, um einerseits bei Verschütten von Flüssigkeiten zu vermeiden, daß diese auf den Fahrer oder das Armaturenbrett gelangen und um andererseits überhaupt ein Verschütten zu vermeiden, in dem in bekannter Weise Becher oder Flasche gegen Kippen gesichert sind.

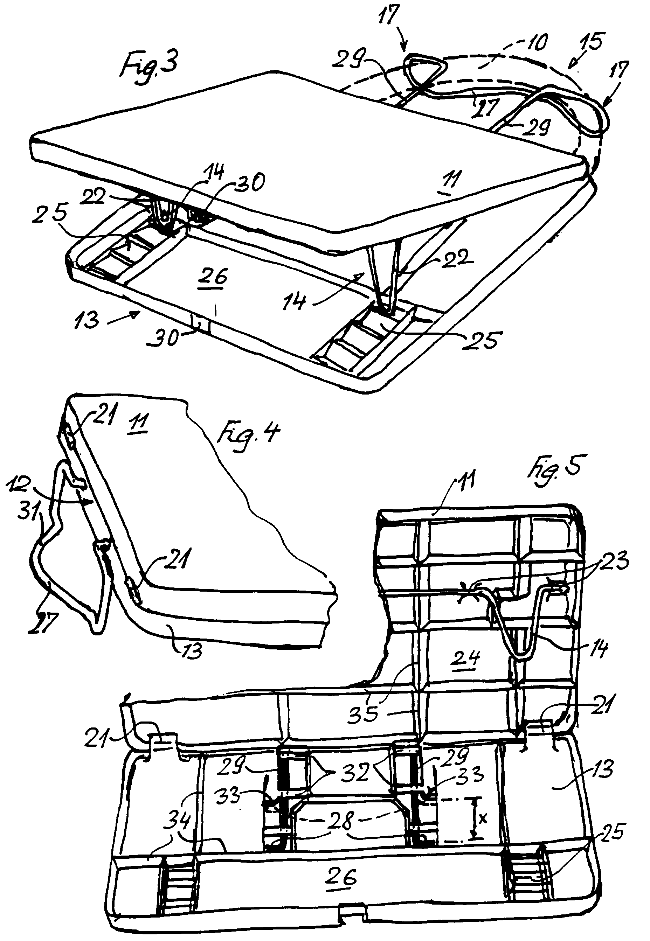

Bei dem in den Fig. 3 bis 5 dargestellten zweiten Ausführungsbeispiel werden die zum ersten Ausführungsbeispiel entsprechenden Teile mit deren Ziffern jedoch um 10 erhöht numeriert. Die Tischplatte 11 ist mit dem Unterteil 13 über Scharniere 21 miteinander verbunden, die auf der Stirnseite 12 dargestellt sind, nämlich auf der dem Fahrer abgewandten Seite der Tischeinrichtung. Als Stützeinrichtung 14 dienen hier mehrfach gekröpfte Drahtbügel 22, die in einfacher Weise in Lagern 23 auf der Unterseite 24 der Tischplatte 11 schwenkbar gelagert sind. Tischplatte 11 und Unterteil 13 der Tischeinrichtung bestehen aus Kunststoff, so daß diese Lager 23 in einfacher Weise bei der Herstellung mit eingearbeitet werden können. Im behälterförmigen Unterteil 13 sind Rasterausnehmungen 25 vorhanden, in die bei aufgeklappter Tischplatte 11 die der Tischplatte 11 abgewandten Enden der Stützeinrichtung 14 eingreifen können. Diese Rastereinrichtungen 25 sind durch Erhöhungen bzw. Vertiefungen des Bodens 26 des Unterteils 13 gebildet. In Fig. 3 ist die Stützeinrichtung ausgeschwenkt dargestellt, in Fig. 5 in eingeschwenktem Zustand, in dem sie an der Unterseite 24 anliegt.

Als Verankerungseinrichtung 15 dient hier ein drahtförmiger mehrfach gekröpfter Haken 17, mit dem diese Verankerungseinrichtung 15 über das Lenkrad 10 gehängt werden kann, wobei die Auflagestellen zum Lenkrad 10 hin verhältnismäßig weit auseinander liegen, um eine bestimmte Auflagestabilität des Unterteils 13 auf dem Lenkrad 10 zu gewährleisten. Dieser Haken 17 ist im wesentlichen U-förmig gebogen, mit zwei lediglich am Ende innerhalb des Unterteils 13 eine Kröpfung 28 aufweisenden geradlinigen Schenkeln 29 und mit einem diese Schenkel 29 verbindenden Drahtbügel 27. Dieser Drahtbügel 27 ist derart geformt, daß die beiden Schenkel 29 nach Austritt aus der Stirnseite 12 zuerst in entgegengesetzte Richtungen abgewinkelt sind, um dann einen parallelen Verlauf quer zum Unterteil 13 zu erhalten, um endlich über einen Bügelabschnitt 31 miteinander verbunden zu werden, der in etwa die Krümmung eines Lenkrades aufweist. Die Schenkel 29 sind, wie in Fig. 5 gezeigt, oberhalb des Bodens 26 des Unterteils 13 axial verschiebbar in Lagern 32 gelagert, wobei die in Fig. 5 dargestellte Stellung dieser Schenkel 29 einer Stellung der Verankerungseinrichtung 15 entspricht, wie sie in Fig. 4 von außen gezeigt ist. Um die in Fig. 3 dargestellte herausgezogene Lage einzunehmen, werden die Schenkel 29 um den in Fig. 5 gezeigten Weg X verschoben, wonach die Kröpfungen 28 an im Bodenteil vorgesehene Anschläge 33 stoßen.

Zwischen Tischplatte 11 und Unterteil 13 ist eine Verriegelungseinrichtung 30 vorgesehen, um den durch Tischplatte und Unterteil gebildeten Behälter abschließen zu können.

Im behälterförmigen Unterteil 13 sind Stege 34 angeordnet, durch die eine Art Fächeraufteilung des Behälters stattfindet, um die aufzunehmenden Gegenstände voneinander trennen zu können. Auf der Unterseite 24 der deckelförmig ausgebildeten Tischplatte 11 sind ebenfalls Stege 35 vorgesehen, die mit den Stegen 34 des Unterteils 13 korrespondieren können, um dadurch die einzelnen Fächer abdecken zu können, um aber auch eine zusätzliche Stabilität zu erhalten.

### Bezugszahlenliste

- 1: Tischplatte
- 2: Stirnseite
- 3: Unterteil
- 4: Stützeinrichtung
- 5: Verankerungseinrichtung
- 6: Schiebeverbindung
- 7: Haken
- 8: Rinne
- 9: Ausnehmung
- 10: Lenkrad
- 11: Tischplatte
- 12: Stirnseite
- 13: Unterteil
- 14: Stützeinrichtung
- 15: Verankerungseinrichtung
- 17: Haken
- 21: Scharniere
- 22: Drahtbügel
- 23: Lager
- 24: Unterseite von 11
- 25: Rastereinrichtung
- 26: Boden
- 27: Drahtbügel
- 28: Kröpfung
- 29: Schenkel
- 30: Verriegelungseinrichtung
- 31: Bügelabschnitt
- 32: Lager
- 33: Anschläge
- 34: Stege
- 35: Stege

## Patentansprüche

1. Tischeinrichtung zur Anbringung am Lenkrad (10) eines Kraftfahrzeuges,
mit einem eine Verankerungseinrichtung (5, 15) zur Verankerung am Lenkrad aufweisenden behälterförmigen Unterteil (3, 13), wobei die Verankerungseinrichtung (5, 15) am behälterförmigen Unterteil (3, 13) angeordnet ist und eine Befestigung der Tischeinrichtung am Lenkrad vorgibt,
mit einer horizontal schwenkbar am behälterförmigen Unterteil (3, 13) angeordneten als Ablagefläche ausgebildeten Tischplatte (1, 11), wobei der behälterförmige Unterteil (3, 13) mit der Tischplatte als Deckel verschließbar ist, und
mit einer Stützeinrichtung (4, 14) zur Bestimmung der Winkellage der Tischplatte (1, 11) zum behälterförmigen Unterteil (3, 13),
dadurch gekennzeichnet,
daß als Ablagefläche die Seite der Tischplatte (1, 11) dient, die dem behälterförmigen Unterteil (3, 13) abgewandt ist,
daß die Schwenkachse zwischen behälterförmigem Unterteil (3, 13) und Tischplatte (1, 11) auf der nach oben weisenden Seite liegt, und
daß die Stützeinrichtung (4, 14) an der Tischplatte (1, 11) und/oder an dem Unterteil (3, 13) auf den einander zugewandten Seiten vorgesehen ist.

2. Tischeinrichtung nach Anspruch 1, dadurch gekennzeichnet, daß die Verankerungseinrichtung (5, 15) Haken (7, 17) odgl. aufweist, die auf der dem Fahrer abgewandten Seite des Lenkrades (10) dieses umgreifen.

3. Tischeinrichtung nach einem der vorhergehenden Ansprüche, dadurch gekennzeichnet, daß die Verankerungseinrichtung (5, 15) eine Verschiebeeinrichtung (6, 27, 29) aufweist, über welche der Unterteil (3, 13) in bezug auf das Lenkrad (10) relativ zum Fahrer hin verstellbar und/oder feststellbar ist.

4. Tischeinrichtung nach Anspruch 3, dadurch gekennzeichnet, daß die Verschiebeeinrichtung (5, 6) eine parallel zum Boden des Unterteils angeordnete Nut- und Federverbindung aufweist.

5. Tischeinrichtung nach Anspruch 3, dadurch gekennzeichnet, daß die Verschiebeeinrichtung einen im wesentlichen U-förmig gebogenen Drahtbügel (27) aufweist, dessen U-Schenkel (29) in Verschieberichtung im Unterteil (13) verschiebbar (32) bzw. einrastbar (33) gelagert sind und dessen die Schenkel (29) verbindender Teil (31) auch als Traggriff dient und so gekröpft ist, daß er das Lenkrad (10) umgreifen kann.

6. Tischeinrichtung nach Anspruch 5, dadurch gekennzeichnet, daß die U-Schenkel (29) innerhalb des Behälters (13) verlaufen.

7. Tischeinrichtung nach einem der vorhergehenden Ansprüche, dadurch gekennzeichnet, daß die Tischplatte (1, 11) und der Unterteil (3, 13) durch ein Scharnier (21) miteinander verbunden und dadurch zueinander verklappbar sind.

8. Tischeinrichtung nach Anspruch 7, dadurch gekennzeichnet, daß die Stützeinrichtung (4) am Unterteil (3) in Richtung Tischplatte (1) schwenkbar gelagert ist (Fig. 1 und 2).

9. Tischeinrichtung nach Anspruch 7, dadurch gekennzeichnet, daß die Stützeinrichtung (14) an der Unterseite (24) der Tischplatte (11) in Richtung Unterteil (13) schwenkbar gelagert ist.

10. Tischeinrichtung nach Anspruch 8, dadurch gekennzeichnet, daß an der Tischplattenunterseite (24) oder im Unterteil (13) Vertiefungen und/oder Erhöhungen (25) vorhanden sind, zur Sicherung der Verschwenkstellung der Stützeinrichtung (14).

11. Tischeinrichtung nach einem der Ansprüche 7 bis 10, dadurch gekennzeichnet, daß die Stützeinrichtung (14) aus einem Drahtbügel (22) besteht.

12. Tischeinrichtung nach einem der vorhergehenden Ansprüche, dadurch gekennzeichnet, daß im Unterteil (3, 13) der Tischplatte (1, 11) zugewandte, Fächer bildende Trennwände (Stege 34) vorhanden sind.

13. Tischeinrichtung nach Anspruch 12, dadurch gekennzeichnet, daß die Fächer in geschlossenem Zustand des Behälters durch die Tischplatte (1, 11) bzw. auf der Innenseite (24) der Tischplatte (1, 11) angeordnete korrespondierende Trennwände (Stege 35) verschließbar sind.

14. Tischeinrichtung nach einem der vorhergehenden Ansprüche, dadurch gekennzeichnet, daß der Behälter durch eine Verriegelungseinrichtung (30) abschließbar ist.

15. Tischeinrichtung nach einem der vorhergehenden Ansprüche, dadurch gekennzeichnet, daß die Tischplatte (1) eine rechteckige Oberfläche mit vorzugsweise abgerundeten Ecken und Ausnehmungen (8, 9) für das Auffangen von Flüssigkeiten, für die Aufnahme von Getränkebehältern udgl. aufweist.

## Claims

1. Table model for adjusting at the steering wheel (10) of an automobile
with a receptacle foot type (3, 13), having an anchoring system (5, 15) for anchoring at the steering wheel, whereas the anchorage system is adjusted to the receptacle foot type (3, 13),
with a swingable table plate (1, 11) adjusted to the receptacle foot (3, 13) as depositing surface, whereas the receptacle foot type (3, 13; box) be fitted with lock and key as a cover to the table plate, and
with supporting device (4, 14) for defining the angularity of the table plate (1, 11) to the type of receptacle (3, 13); characterized as far as
the side of the table plate (1, 11) serving as depositing surface being turned off the receptacle foot type (3, 13);
as far as an adjustment of the table device to the steering wheel prevails, whereas the swinging axle is horizontal between the type of receptacle foot (3, 13) and table plate (1, 11), positioned on the upper side, and
that a supporting device be provided at the table plate and/or on the support of the sides turned to each other.

2. Table device according to Title 1, designated as far as the anchorage device (5, 15) hook (7, 17) or similar is embracing the geering wheel (10) on the driver's opposite side (10).

3. Table device according to one of the preceding Titles, designated as far as the anchorage device (5, 15) containing a shifter (6, 27, 29), over which the support (3, 13) is fixable and/or adjustable on behalf of the steering wheel (10 relatively close toward the driver.

4. Table device according to Title 3, designated as far as the sliding device (5, 6) has a slot and feather cover parallel to the bottom of the support.

5. Table device according to Title 3, designated as far as the sliding device has a wire strap (27) in particular U-curved, whose U-legs (29) in direction of sliding into the supporting part (13) are adjusted movable (32) resp. snapping (33), and whose connecting part (31) connecting the legs also serve as handle, and so cranked that the steering wheel (10) can be embraced.

6. Table device according to Title 5, designated as far as the U-legs (29) continue within the box (13).

7. Table device according to one of the preceding Titles, designated as far as the table plate (1, 11) and the support (3, 13) are conbined with each other by a hinge (21), and consequently are dischargeable to each other.

8. Table device according to Title 7, designated as far as the supporting device (4) is positioned (Fig. 1, 2) swinging at the bottom (3) in direction of the table plate (1).

9. Table device according to Title 7, designated as far as the supporting device (14) is positioned swinging at the bottom of the table plate (11) in direction of the bottom part (13).

10. Table device according to Titel 8, designated as far as there are deepenings at the bottom part of the table plate (24) or in the foot (13), and/or elevations (25) to secure the deviation position of the supporting device (14).

11. Table device according to one of the Titles 7 to 10, designated as far as the supporting mechanism (14) consists of a wire strap (22).

12. Table device according to one of the preceding Titles, designated as far as the shelfs (bars 34) are installed towards the lower part (3,13) of the table plate (1,11).

13. Table device according to Title 12, designated as far as the shelfs in closed condition of the box can be locked through the table plate (1,11), resp. on the inner side (24) of the table plate (1,11) corresponding shelfs (bars 35).

14. Table device according to one of the preceding Titles, designated as far as the box can be locked by an interlocking system (30).

15. Table device according to one of the above Titles, designated as far as the table plate (1) shows a rectangular surface with preferred rounded edges and clearances (8, 9) to pick up liquids for beverage boxes etc..

## Revendications

1. Dispositif de table pour monter au volant (10) d'une véhicule,
avec un ancrage (5, 15) pour haubanage au volant montrant une substructure (3, 13) boîte, à l'occasion de quoi se trouve le dispositif d'ancrage à la substructure en forme de boîte (3, 13),
avec un dessu de table pivotant monté à la substructure en forme de boîte (3, 13) comme récepteur spécialement développé (1, 11), du fait que la substructure en forme de boîte (3, 13; coffre) avec le dessu de table comme couvercle soit fermable, et
avec dispositif de support (4, 14) pour détermination de position angulaire du dessu de table (1, 11) substructure en forme de boîte (3, 13); désigné du fait que,
le côté du dessu de table (1, 11) serve comme récepteur, opposant la substructure en forme de boîte (3, 13),
une fixation précède le dispositif de la table au volant, lors que le pivotant continue entre la substructure en forme de boîte (3, 13) et
dessu de table (1, 11) restant horizontal, et lors qu'il se trouve sur le côté vers le haut, et du fait qu'un dispositif de support au dessu de table soit prévue et/où à la substructure sur les côtés opposées.

2. Dispositif selon Titre 1, caractérisé du fait que le system d'haubanage (5, 15) contient un crochet (7, 17) où pareil, enveloppant le volant qui se trouve à l' opposé du conducteur (10).

3. Dispositif de table selon un des Titres précédants, caractérisé du fait que le haubanage (5, 15) contient un system de déplacement (6, 27, 29), vers où le bas (3, 13) en vue du volant (10), soit changeable et/ou arrêtable près du conducteur.

4. Dispositif de table selon Titre 3, caractérisé du fait que le system de déplacement (5, 6) contienne une combinaison rainure/ressort parallel au fond du support.

5. Dispositif de table selon Titre 3, caractérisé du fait que le system de éplacement contienne essentiellement un étrier-fil (27) courbé en forme de U, dont les jambes en U (29) sont montées sense vers le movement dans le bas (13) changeable (32) resp. verrouillable (33), et dont le system (29), combinant les jambes(31) servent aussi de poignée et conséquemment soit coudé pour permettre le volant (19) d'être enveloppé.

6. Dispositif de tabel selon Titre 5, caractérisé du fait que les jambes en U (29) continuent dans l'intérieur de la boîte (13).

7. Dispositif de table selon l'un des Titres précédents, caractérisé du fait que le dessu de table (1, 11) et le bas (3, 13) soient combinés par une charnière (21), et en conséquence puisse être claqués.

8. Dispositif de table selon Titre 7, caractérisé du fait que le dispositif de support (4) au bas (3) soit fixé pivotant (fig. 1 et 2) en sense du dessu de la table (1).

9. Dispositif de table selon Titre 7, caractérisé du fait que le dispositif de support (14) soit fixé movable vers le bas du dessu (11).

10. Dispositif de table selon Titre 8, caractérisé du fait qu'il existent des cavités et/ou bosses (25) en bas du dessu de la table (24) ou dans le support (13) pour la sécurité de la position balayage du mechanism de support (14).

11. Dispositif de table selon un des Titres 7 à 10, caractérisé du fait que le system de support (14) consiste de l'étrier-fil (22).

12. Dispositif de table selon un des Titres précédents, caractérisé du fait qu'il y a des cloisons formant des cases (traverses 34) dans le bas (3, 13) du dessus de table (1, 11) opposé.

13. Dispositif de table selon Titre 12, caractérisé du fait que les cloisons de la boîte fermés parmi le dessus de table (1,11) resp. sur le partie intérieur (24) du dessus (1,11), contenant des cloisons respectifs (traverses 35) sont fermable.

14. Dispositif de table selon un des Titres précédents, caractérisé du fait que la boîte est fermable par un system de vérouillage (30).

15. Dispositif de table selon un des Titres précédents, caractérisé du fait que le dessu de table (1) contient une surtace rectangulaire avec des angles arrondis par préférence et des creux (8, 9) pour capter les boîtes de liquides et similaire.
